# DEMANDE DE BREVET EUROPEEN

(11) **EP 1 231 384 A1**
(43) Date de publication de la demande: **14.08.2002**
(21) Numéro de dépôt: 02352002.6
(22) Date de dépôt: 07.02.2002
(51) Int. Cl.: F04D 29/70, C02F 9/00

(54) **Dispositif de pompage hydraulique perfectionné**

(30) Priorité: 09.02.2001 FR 0101780
(71) Demandeur: Orientation Production, 24170 Montplaisant (FR)
(72) Inventeur: Vogt Matthias, 24170 Montplaisant (FR)
(74) Mandataire: Morelle, Guy Georges Alain

(57) **Abrégé**

Dispositif de pompage hydraulique, comportant :
- une pompe hydraulique (1) munie de moyens (2) aptes à générer un débit de liquide,
- des moyens d'admission (3) dudit liquide dans ladite pompe,
- des moyens de refoulement (4) dudit liquide hors de ladite pompe,
ledit dispositif comprenant une enceinte (5), des moyens d'admission du liquide dans l'enceinte, des moyens d'évacuation du liquide hors de l'enceinte, ladite enceinte comportant :
- une première partie (8) comportant une paroi extérieure étanche, munie des moyens d'admission du liquide dans la pompe ou d'évacuation du liquide hors de l'enceinte,
- une deuxième partie (10) comportant une paroi extérieure munie des moyens d'admission (6) du liquide à l'intérieur de l'enceinte,
- au moins une troisième partie (11), apte à être intercalée entre lesdites première (8) et deuxième (10) parties, en étant associée à celles-ci de manière démontable, afin que le liquide admis à l'intérieur de l'enceinte traverse la troisième partie (11) avant d'être évacué hors de l'enceinte (5) par la pompe hydrauliquc (1), la troisième partie étant munie d'un système spécifique de traitement dudit liquide.

## Description

La présente invention se rapporte aux dispositifs de pompage hydraulique, comportant une pompe hydraulique munie de moyens aptes à générer un débit de liquide, des moyens d'admission dudit liquide dans la pompe, des moyens de refoulement dudit liquide hors de la pompe.

De tels dispositifs sont connus dans l'art antérieur. Ils trouvent une multitude d'applications très diversifiées, notamment dans la genèse d'une circulation d'eau en circuit fermé. De tels dispositifs présentent généralement un système de filtration de l'eau aspirée dans la pompe, ou un système de traitement de l'eau par rayonnement ultraviolet, ou encore un système de traitement de l'eau par chauffage, parfois plusieurs systèmes de traitement sont installés sur un dispositif spécifique. Cependant, les dispositifs connus manquent de souplesse d'utilisation de sorte qu'ils sont conçus pour une application spécifique nécessitant un traitement déterminé de l'eau, et qu'ils ne sont pas de ce fait utilisables pour une autre application nécessitant un traitement différent de l'eau. Ainsi, il est nécessaire de concevoir un dispositif hydraulique précis pour une application déterminée, ce qui rend le coût d'un tel dispositif très élevé compte tenu de sa diffusion limité à l'application considérée.

La présente invention se propose de pallier ces inconvénients. Plus précisément, elle consiste en un dispositif de pompage hydraulique, comportant
- une pompe hydraulique munie de moyens aptes à générer un débit de liquide,
- des moyens d'admission dudit liquide dans ladite pompe,
- des moyens de refoulement dudit liquide hors de ladite pompe,
caractérisé en ce que ledit dispositif comprend une enceinte, des moyens d'admission du liquide dans l'enceinte, des moyens d'évacuation du liquide hors de l'enceinte, ladite enceinte comportant
- une première partie comportant une paroi extérieure étanche, munie des moyens d'admission du liquide dans la pompe ou d'évacuation du liquide hors de l'enceinte,
- une deuxième partie constituée d'une paroi extérieure munie des moyens d'admission du liquide à l'intérieur de l'enceinte,
- au moins une troisième partie, apte à être intercalée entre lesdites première et deuxième parties, en étant associée à celles-ci de manière démontable, afin que le liquide admis à l'intérieur de l'enceinte traverse la troisième partie avant d'être évacué hors de l'enceinte par la pompe hydraulique, la troisième partie étant munie d'un système spécifique de traitement dudit liquide.

La structure du dispositif selon l'invention permet, grâce à une enceinte en plusieurs parties d'obtenir un dispositif modulable dont une partie est variable, peut être changée et adaptée à un besoin spécifique sans que le dispositif complet lui-même soit à changer. Ainsi, le dispositif selon l'invention propose une adaptabilité aisée à des besoins très différents, en remplaçant uniquement le minimum de matériel en fonction des besoins, donc avec des coûts minimums.

Selon une caractéristique avantageuse, le dispositif de pompage hydraulique selon l'invention comprend en outre une quatrième partie, apte à être intercalée entre lesdites première et troisième parties, ou entre lesdites troisième et deuxième parties, en étant associée de manière démontable aux deux parties entre lesquelles elle est intercalée, afin que le liquide admis à l'intérieur de l'enceinte traverse en outre la quatrième partie avant d'être évacué hors de l'enceinte par la pompe hydraulique, la quatrième partie étant munie d'un système de traitement dudit liquide, différent de celui de la troisième partie.

Dans un objectif d'adaptabilité maximum, le dispositif selon l'invention propose un traitement multiple en série du liquide.

Selon une caractéristique avantageuse, le dispositif de pompage hydraulique selon l'invention comprend en outre une cinquième partie, apte à être intercalée entre lesdites première et deuxième parties, en étant associées à celles-ci et/ou à la troisième partie, et/ou à la quatrième partie de manière démontable, afin que le liquide admis à l'intérieur de l'enceinte traverse en outre la cinquième partie avant d'être évacué hors de l'enceinte par la pompe hydraulique, la cinquième partie étant munie d'un système de traitement dudit liquide, différent de celui de la troisième partie et de celui de la quatrième partie.

Selon une caractéristique avantageuse, lesdites troisième, quatrième, et cinquième parties sont respectivement munies d'un système de traitement dudit liquide choisi parmi les systèmes suivants :
- système de traitement par filtre,
- système de traitement par rayonnement U.V.,
- système de traitement par chauffage.

Selon une caractéristique avantageuse, ladite deuxième partie comporte des moyens pour une association de celle-ci à la première partie.

Selon une caractéristique avantageuse, ladite première partie de l'enceinte est située au dessous de la deuxième partie.

Selon une caractéristique avantageuse, lesdits systèmes de traitement spécifiques du liquide sont disposés de manière à agir sur le liquide avant que ce dernier pénètre dans la pompe hydraulique.

Selon une caractéristique avantageuse, la pompe hydraulique est placée dans ladite enceinte.

Selon une caractéristique avantageuse, la pompe hydraulique est fixée à l'intérieur de la première partie de l'enceinte.

L'invention sera mieux comprise et d'autres caractéristiques et avantages apparaîtront à la lecture de la description qui suit de plusieurs exemples de mode de réalisation d'un dispositif de pompage hydraulique selon l'invention, exemples donnés à titre illustratif non limitatifs.

La figure 1 représente une vue schématique en coupe, suivant la ligne I-I de la figure 4, d'un exemple de mode de réalisation d'un dispositif de pompage hydraulique selon l'invention.

La figure 2 représente une vue en coupe suivant les lignes II-II de la figure 1.

La figure 3 représente en vue de côté un élément isolé, illustrant une partie amovible de l'exemple de la figure 1.

La figure 4 représente une vue de côté du dispositif selon la figure 1.

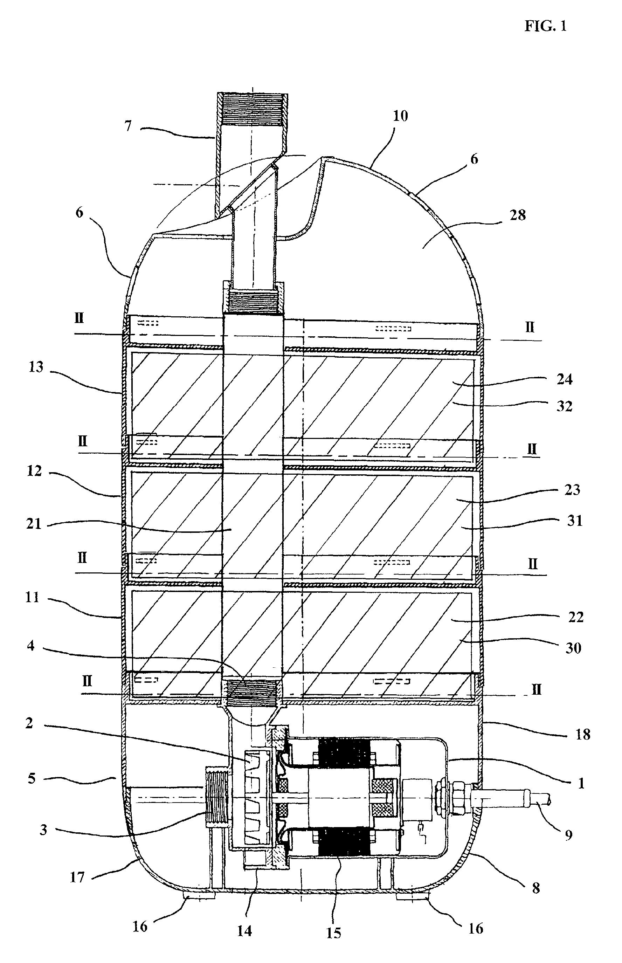

Le dispositif de pompage hydraulique représenté sur la figure 1 comporte une pompe hydraulique 1 munie de moyens 2 aptes à générer un débit de liquide, des moyens d'admission 3 du liquide dans la pompe 1, des moyens de refoulement 4 du liquide hors de la pompe 1, une enceinte 5, des moyens d'admission 6 du liquide dans l'enceinte, des moyens d'évacuation 7 du liquide hors de l'enceinte 5.

L'enceinte 5 comporte une première partie 8 comportant une paroi extérieure étanche, munie des moyens d'admission 3, 19 du liquide dans la pompe 1, une deuxième partie 10 comportant une paroi extérieure munie des moyens d'admission 6 du liquide à l'intérieur de l'enceinte, une troisième 11, une quatrième 12, et une cinquième 13 parties comportant chacune une paroi extérieure étanche, aptes à être intercalées entre les première 8 et deuxième 10 parties, en étant associée à celles-ci de manière démontable et étanche, afin que le liquide admis à l'intérieur de l'enceinte 5 par les moyens d'admission 6 équipant la deuxième partie 10 de l'enceinte, traverse les troisième 11, quatrième 12, et cinquième 13 parties avant d'être évacué ou dirigé hors de l'enceinte via la pompe hydraulique 1.

Les troisième 11, quatrième 12, et cinquième 13 parties sont respectivement munies d'un système de traitement du liquide 30, 31, 32 choisi parmi les systèmes suivants connus : système de traitement par filtre 32, système de traitement par rayonnement U.V. 31, système de traitement par chauffage 30. Chaque système est installé dans la partie correspondante de manière que toute l'eau pénétrant dans ladite partie le traverse nécessairement. Par exemple, la troisième partie 11 sera équipée du système de traitement par chauffage 30, la quatrième partie 12 du système de traitement par rayonnement ultraviolet 31, la cinquième partie 13 du système de traitement par filtre 32 ; ainsi l'eau aspirée dans l'enceinte 5 par les moyens d'aspiration 6 de la deuxième partie 10 est d'abord filtrée, puis traitée par U.V., et enfin chauffée avant d'entrer dans la pompe hydraulique 1. Il est à noter que la partie placée directement en aval de la deuxième partie dans le dispositif représenté, soit la cinquième partie, peut de manière alternative posséder une paroi extérieure munie de perçages (non représentés) pour une entrée d'eau supplémentaire dans le dispositif visant à augmenter le débit d'entrée d'eau de ce dernier tout en assurant une traversée, au moins partielle, de l'eau dans le système de traitement de l'eau intégré dans la cinquième partie afin que toute l'eau qui entre par les entrées latérales de la cinquième partie soit traitée par le système visé.

La pompe hydraulique 1 peut être toute pompe hydraulique connue utilisable, choisie en fonction des besoins du dispositif de pompage, par exemple une pompe centrifuge comme représenté dans l'exemple pour le pompage de l'eau. La pompe comprend un corps 14 de pompe proprement dit, fixé à un moteur électrique 15 d'entraînement alimenté par un câble électrique 9. Le corps de pompe 14 présente une entrée 3 de liquide aspiré, et une sortie 4 de refoulement du liquide.

La pompe hydraulique 1 est avantageusement fixée de manière démontable selon tous moyens connus, par exemple par vissage, dans la première partie 8 de l'enceinte 5, laquelle est destinée à être posée sur un support (non représenté), le sol par exemple, grâce à des pieds 16 appropriés, de sorte que le liquide pénétrant dans la première partie de l'enceinte se trouve aspiré dans l'entrée 3 prévue à cet effet de la pompe 1. La sortie 4 de refoulement du liquide hors de la pompe est dirigée par exemple vers le haut comme représenté sur la figure 1 et connectée à une conduite 21 qui permet une évacuation de l'eau hors de l'enceinte 5, verticalement vers le haut dans l'exemple représenté .

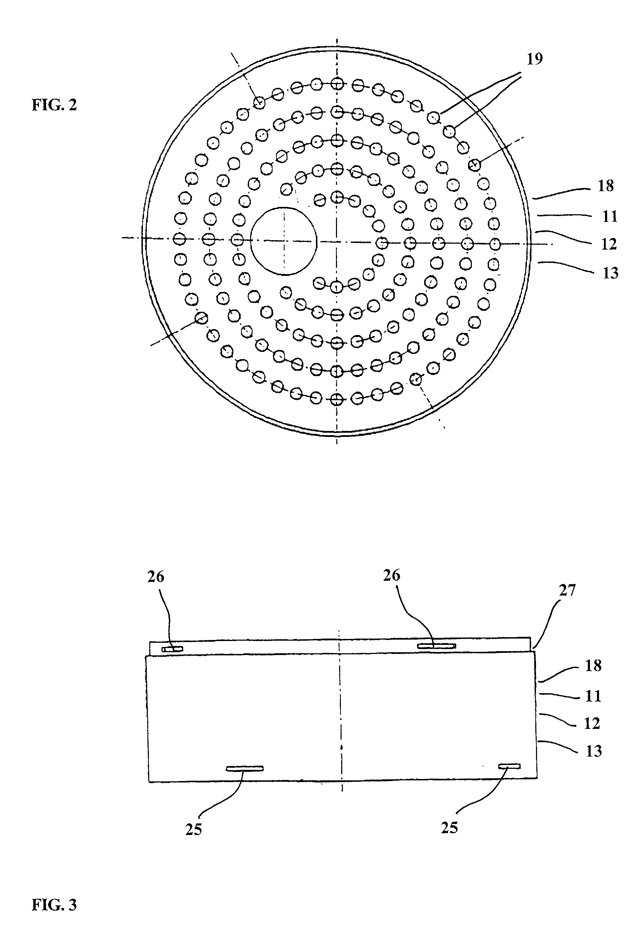

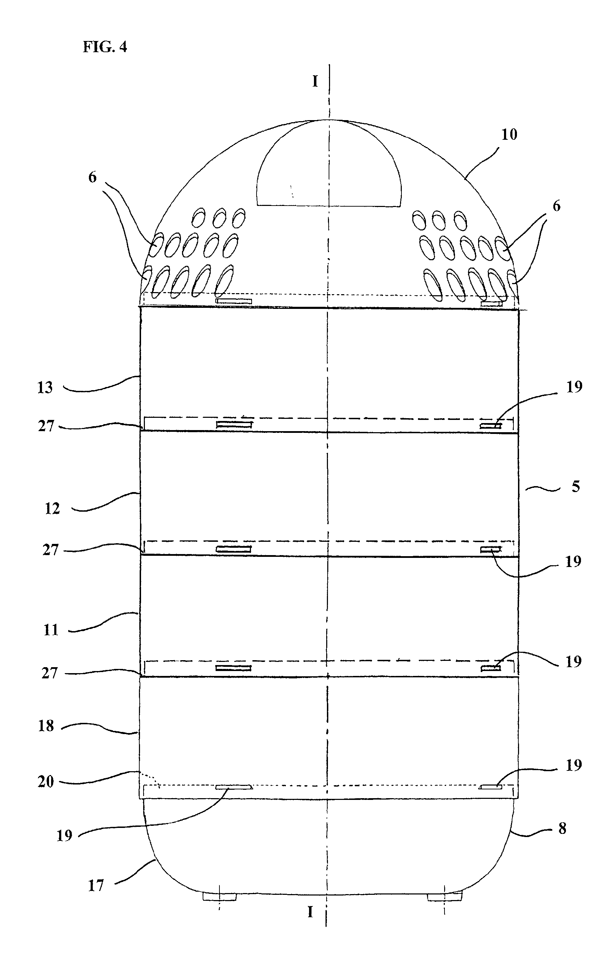

La première partie 8 de l'enceinte adopte avantageusement la forme d'une cuvette à bord circulaire et au fond de laquelle est fixée la pompe hydraulique 1, pour une meilleure stabilité du dispositif. La cuvette 17 est recouverte d'un couvercle 18 muni d'une pluralité de perçages 19, comme représenté sur la figure 2, afin de permettre le passage du liquide, provenant de la troisième partie 11 de l'enceinte, dans la première partie 8 de celle-ci. Le couvercle 18 est associé à la cuvette de manière démontable et de préférence étanche, par exemple au moyen d'un emboîtement circulaire à épaulement 27 comme représenté sur les figures 1 à 4. La liaison du couvercle 18 avec la cuvette 17 peut être obtenue par clipage aux moyens de plusieurs protubérances 26 placées sur le pourtour du bord supérieur 20 de la cuvette 18, pénétrant dans des creux 25 correspondants réalisés dans le couvercle 18, comme représenté sur les figures 3 et 4 sous l'effet d'une pression des éléments l'un contre l'autre. Le couvercle 18 sera avantageusement muni d'une ouverture pour le passage étanche d'une conduite 21 d'évacuation du liquide refoulé par la pompe hydraulique 1.

Le couvercle 18 est muni sur le pourtour de sa partie supérieure de moyens permettant une liaison avec la troisième partie 11 de l'enceinte. De manière avantageuse dans un souci de simplification et de standardisation de la fabrication, la partie supérieure du couvercle 18 est similaire à la partie supérieure de la cuvette 17, c'est à dire qu'elle est configurée de manière à permettre une association avec une partie identique à elle-même ; ainsi, il est avantageux que la partie supérieure du couvercle 18 puisse s'emboîter "théoriquement" dans la partie inférieure de ce même couvercle, ou plus précisément, dans la partie inférieure de la troisième 11, ou quatrième 12, ou cinquième 13 partie de l'enceinte. Ainsi, la partie supérieure du couvercle 18 s'emboîtera également et avantageusement dans la partie inférieure de la deuxième partie 10 de l'enceinte 5. On obtient de cette manière une enceinte modulable pouvant comprendre seulement les première 8 et deuxième 10 parties associées ensemble, ou une ou plusieurs parties intermédiaires 11, 12, 13 telles que décrites plus haut, emboîtées entre les première 8 et deuxième 10 parties.

Dans l'exemple représenté, les troisième 11, quatrième 12, et cinquième 13 parties de l'enceinte 5 sont donc identiques au couvercle 18, comme représenté sur la figure 3, et se différencient de celui-ci seulement par le système de traitement de l'eau auquel elles sont respectivement associées. En effet, le dessus du couvercle 18 et l'espace 22 défini par la paroi circulaire extérieure de la troisième partie 11, le dessus de la troisième partie 11 et l'espace 23 défini par la paroi circulaire extérieure de la quatrième partie 12, le dessus de la quatrième partie 11 et l'espace 24 défini par la paroi circulaire extérieure de la cinquième partie 13, et le cas échéant le dessus de la cinquième partie 13 et l'espace 28, défini par la paroi externe de la deuxième partie 10, définissent respectivement un logement pour le système choisi de traitement de l'eau. Dans l'exemple représenté, aucun système de traitement n'est prévu au dessus de la cinquième partie 13, mais l'espace disponible reste utilisable.

Un intérêt important d'une telle enceinte modulable est qu'une partie peut être ajoutée ou supprimée de l'enceinte très facilement. Dans l'exemple représenté, il est nécessaire de démonter le conduit 21 d'évacuation de l'eau hors de l'enceinte pour changer, supprimer, ou ajouter une partie munie d'un système de traitement de l'eau déterminé, mais d'autres montages peuvent être appliqués selon les besoins ; par exemple, le conduit 21 de refoulement de l'eau peut très bien éviter de traverser les parties de l'enceinte situées au dessus de la première partie 8, et être directement dirigé vers l'extérieur de l'enceinte au niveau de la première partie. Ainsi, les troisième 11, quatrième 12, et cinquième 13 enceintes peuvent être retirées par une simple traction au niveau des joints d'assemblage assurant la liaison des parties entre elles, et tels que décrits plus haut.

Le matériau constitutif de l'enceinte, plus spécifiquement des parties de l'enceinte, sera un matériau étanche, par exemple un matériau métallique ou une matière plastique rigide. L'étanchéité au niveau des joints d'assemblage des parties de l'enceinte entre elles, sera assurée par l'ajustement de la liaison des parties elle-même, directement par le contact des matériaux constitutifs des parties de l'enceinte, ou par un joint d'étanchéité, selon tout moyen connu.

Les perçages 19 du couvercle 18 comme des troisième 11, quatrième 12, et cinquième 13 parties de l'enceinte, nécessaires pour acheminer l'eau admise dans l'enceinte vers les moyens d'entrée 3 dans la pompe, peuvent adopter toutes formes, notamment une pluralité de perçages régulièrement distribués sur la section transversale du couvercle, par exemple sous la forme de cercles concentriques comme représenté sur la figure 2.

Il est à noter que le couvercle 18 ou la cuvette 17 sera muni d'une traversée étanche pour le câble électrique 9. Dans le cas où le couvercle possède la traversée étanche, celle-ci ne sera pas présente sur les troisième, quatrième, et cinquième parties de l'enceinte, ou sera obturée par un bouchon dans le cas contraire.

Comme décrit plus haut, la 12 quatrième partie comporte une paroi extérieure étanche, et est apte à être intercalée entre les première 8 et troisième 11 parties, ou entre les troisième 11 et deuxième 10 parties, ou entre les troisième et cinquième parties comme représenté sur la figure 1, en étant associée de manière démontable et étanche aux deux parties entre lesquelles elle est intercalée, afin que le liquide admis à l'intérieur de l'enceinte traverse en outre la quatrième partie 12 avant d'être rejeté hors de l'enceinte par la pompe hydraulique, la quatrième partie étant munie d'un système de traitement par rayonnement ultraviolet.

La cinquième partie 13 comporte une paroi extérieure étanche, apte à être intercalée entre les première 8 et deuxième 10 parties, en étant associées à celles-ci comme décrit précédemment, plus particulièrement entre les quatrième 12 et deuxième 10 parties, de manière démontable et étanche, afin que le liquide admis à l'intérieur de l'enceinte traverse en outre la cinquième partie avant d'être évacué hors de l'enceinte par la pompe hydraulique, la cinquième partie étant munie d'un système de traitement du liquide par filtre.

La deuxième partie présente une forme sensiblement hémisphérique, dotée de perçages régulièrement distribués sur la surface de la surface hémisphérique, et dotée en outre d'une traversée non nécessairement étanche pour le passage de la conduite d'évacuation de l'eau refoulée par la pompe, comme représenté sur les figures 1 et 4.

Il est à noter que l'enceinte peut adopter toute forme appropriée en fonction de l'usage auquel elle est destiné et en outre de l'emplacement disponible pour le dispositif de pompage selon l'invention. La forme cylindrique à section circulaire représentée sur les figures est bien entendu donnée à titre d'exemple seulement.

De même, il est à noter que les troisième, quatrième, et cinquième parties de l'enceinte peuvent adopter des hauteurs différentes en fonction des besoins d'espace respectif intérieur à ces parties; en effet, des hauteurs différentes n'empêchent pas l'interchangeabilité de chaque partie d'enceinte par une partie identique ou par une partie de hauteur différente, dès lors que les zones supérieures et inférieures des parties sont identiques pour assurer une association avec les parties en place de l'enceinte.

Le dispositif selon l'invention trouve en raison de sa souplesse d'utilisation et d'adaptation, de multiples applications dans tout domaine où il est nécessaire de fournir une eau nettoyée.

## Revendications

1. Dispositif de pompage hydraulique, comportant :
- une pompe hydraulique (1) munie de moyens (2) aptes à générer un débit de liquide,
- des moyens d'admission (3) dudit liquide dans ladite pompe,
- des moyens de refoulement (4) dudit liquide hors de ladite pompe,
***caractérisé en ce que*** ledit dispositif comprend une enceinte (5), des moyens d'admission du liquide dans l'enceinte, des moyens d'évacuation du liquide hors de l'enceinte, ladite enceinte comportant :
- une première partie (8) comportant une paroi extérieure étanche, munie des moyens d'admission du liquide dans la pompe ou d'évacuation du liquide hors de l'enceinte,
- une deuxième partie (10) comportant une paroi extérieure munie des moyens d'admission (6) du liquide à l'intérieur de l'enceinte,
- au moins une troisième partie (11), apte à être intercalée entre lesdites première (8) et deuxième (10) parties, en étant associée à celles-ci de manière démontable, afin que le liquide admis à l'intérieur de l'enceinte traverse la troisième partie (11) avant d'être évacué hors de l'enceinte (5) par la pompe hydraulique (1), la troisième partie étant munie d'un système spécifique de traitement dudit liquide.

2. Dispositif de pompage hydraulique suivant la revendication 1, ***caractérisé en ce qu***'il comprend en outre une quatrième partie (12), apte à être intercalée entre lesdites première (8) et troisième (11) parties, ou entre lesdites troisième (11) et deuxième (10) parties, en étant associée de manière démontable aux deux parties entre lesquelles elle est intercalée, afin que le liquide admis à l'intérieur de l'enceinte traverse en outre la quatrième partie (12) avant d'être évacué hors de l'enceinte par la pompe hydraulique, la quatrième partie étant munie d'un système de traitement dudit liquide, différent de celui de la troisième partie.

3. Dispositif de pompage hydraulique suivant la revendication 2, ***caractérisé en ce qu***'il comprend en outre une cinquième partie (13), apte à être intercalée entre lesdites première (8) et deuxième (10) parties, en étant associées à celles-ci et/ou à la troisième partie (11), et/ou à la quatrième partie (12) de manière démontable, afin que le liquide admis à l'intérieur de l'enceinte (5) traverse en outre la cinquième partie (13) avant d'être évacué hors de l'enceinte par la pompe hydraulique, la cinquième partie étant munie d'un système de traitement dudit liquide, différent de celui de la troisième partie et de celui de la quatrième partie.

4. Dispositif de pompage hydraulique suivant la revendication 3, ***caractérisé en ce que*** lesdites troisième (11), quatrième (12), et cinquième (13) parties sont respectivement munies d'un système de traitement dudit liquide choisi parmi les systèmes suivants :
- système de traitement par filtre (32),
- système de traitement par rayonnement U.V. (23),
- système de traitement par chauffage (30).

5. Dispositif de pompage hydraulique suivant la revendication 3 ou 4, ***caractérisé* *en ce que*** ladite deuxième partie (10) comporte des moyens pour une association de celle-ci à la première partie (8).

6. Dispositif de pompage hydraulique suivant l'une quelconque des revendications 1 à 5, ***caractérisé en ce que*** ladite première partie (8) de l'enceinte est située au dessous de la deuxième partie (10).

7. Dispositif de pompage hydraulique suivant l'une quelconque des revendications 1 à 6, ***caractérisé en ce que*** lesdits systèmes de traitement spécifiques du liquide sont disposés de manière à agir sur le liquide avant que ce dernier pénètre dans la pompe hydraulique (1).

8. Dispositif de pompage hydraulique suivant l'une quelconque des revendications 1 à 7, ***caractérisé en ce que*** la pompe hydraulique (1) est placée dans ladite enceinte (5).

9. Dispositif de pompage hydraulique suivant la revendication 8, ***caractérisé en ce que*** la pompe hydraulique (1) est fixée à l'intérieur de la première partie (8) de l'enceinte (5).
